Europäisches Patentamt

European Patent Office

Office européen des brevets

(11) Veröffentlichungsnummer: **0 248 153**
**A2**

## (12) EUROPÄISCHE PATENTANMELDUNG

(21) Anmeldenummer: **87103467.4**

(22) Anmeldetag: **11.03.87**

(51) Int. Cl.4: **G01L 5/12 , G01L 9/00**

(30) Priorität: **23.05.86 DE 3617380**

(43) Veröffentlichungstag der Anmeldung:
**09.12.87 Patentblatt 87/50**

(84) Benannte Vertragsstaaten:
**FR GB IT**

(71) Anmelder: **HERMANN BERSTORFF Maschinenbau GmbH**
**An der Breiten Wiese 3/5**
**D-3000 Hannover 61(DE)**

(72) Erfinder: **Chszaniecki, Siegfried**
**Ostermannstrasse 5**
**D-3000 Hannover 1(DE)**

(54) Einrichtung zum Messen des Massedruckes in einem Zweischneckenextruder.

(57) Es wird eine Verbesserung an einer Einrichtung zum Messen des Massedruckes in einem Zweischneckenextruder aufgezeigt, bei der als Verformungselemente für die Rückleitung des Axialrückdruckes der Schnecken zum Extrudergehäuse Zuganker mit darauf befestigten Halbleiter-Dehnungsmeßstreifen eingesetzt werden.

EP 0 248 153 A2

## Einrichtung zum Messen des Massedruckes in einem Zweischneckenextruder

Die Erfindung betrifft eine Einrichtung zum Messen des Massedruckes in einem Zweischneckenextruder gemäß dem Oberbegriff von Anspruch 1.

Aus dem DE-Gbm 72 41 371 ist eine Schneckenpresse mit einer Meßeinrichtung zum Messen des auf die Plastifizierschnecke ausgeübten Axialrückdruckes bekannt. An dem mit einem Axialrückdruck belasteten Ende einer Plastifizierschnecke, hinter dem Rückdrucklager, ist ein - scheibenförmiges Verformungselement eingebaut, auf dem Halbleiter-Dehnungsmeßstreifen aufgeklebt sind. Die Dehnungsmeßstreifen sind an eine geeignete Meß-und Anzeigeeinrichtung angeschlossen.

Für die Anordnung des scheibenförmigen Verformungselementes sind zusätzliche Bauteile innerhalb des Getriebes erforderlich, die eine erhebliche Verteuerung des Getriebes bzw. des Rückdrucklagers erforderlich machen.

Weiterhin ist es nicht möglich, für beide Schnecken entsprechende scheibenförmige Verformungselemente vorzusehen, weil der Raum hinter der zweiten als Abtriebswelle ausgenutzten Welle für die Abtriebswelle selbst benötigt wird. Ein ringförmiges, hinter dem Rückdrucklager der zweiten Schneckenwelle angeordnetes Verformungselement kostet ein Vielfaches des normalen - scheibenförmigen Verformungselementes.

Es ist die Aufgabe der Erfindung, eine Einrichtung zum Messen des Massedruckes in einem Zweischneckenextruder vorzuschlagen, die ohne zusätzliche Getriebe-oder Rückdrucklagerbauelemente verwirklicht werden kann.

Weiterhin soll mit dieser Einrichtung der Rückdruck, d.h. der Massedruck im Zweischneckenextruder auch für jede Schnecke separat meßbar sein, ohne daß zusätzliche Bauteile erforderlich sind.

Die Aufgabe wird durch die im kennzeichnenden Teil des Patentanspruches niedergelegten Merkmale gelöst.

Durch die Ausbildung der Zuganker für die Rückleitung der Axialrückdruckkräfte zum Extrudergehäuse als Träger für die Dehnungsmeßstreifen, wird in idealer Weise und ohne jegliche zusätzliche Bauteile (am Rückdrucklager bzw. in einem Getriebe) eine Möglichkeit aufgezeigt, die Rückdruckkräfte der beiden Schnecken und somit den Massedruck im Extrusionsraum zu messen.

Übliche Druckmeßeinrichtungen für die Ermittlung des Massedruckes in der Wandung des Extruderzylinders sind sehr störanfällig und geben darüber hinaus nur den Druck an einer bestimmten Stelle innerhalb des Extrusionsraumes wieder.

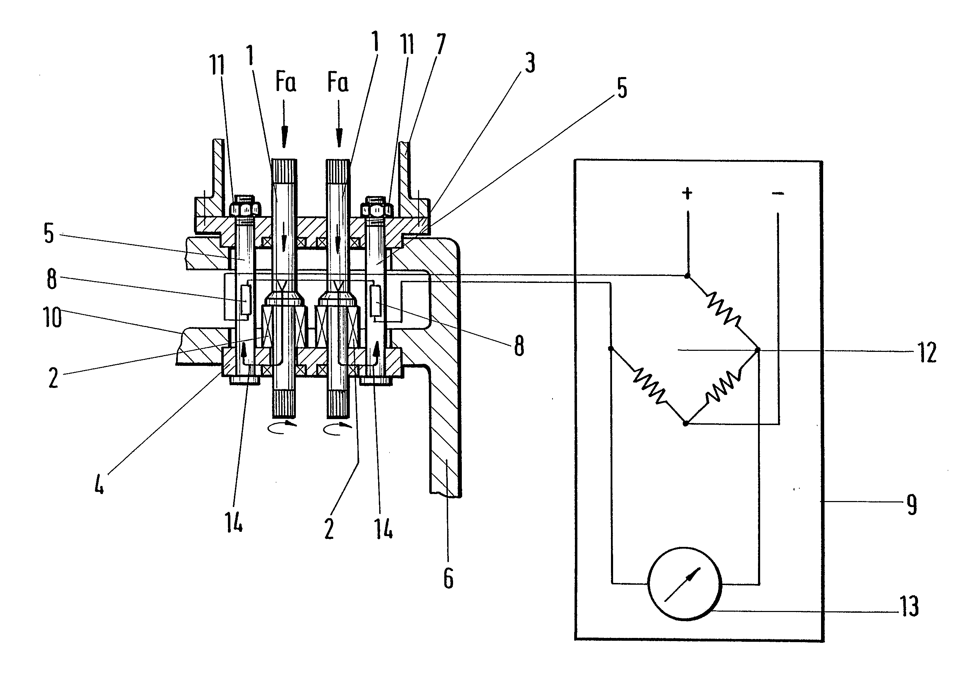

Ein Ausführungsbeispiel der Erfindung wird in Fig. 1 der Zeichnung dargestellt und nachfolgend erläutert.

Mit 1 werden die Schneckenabtriebswellen für zwei nicht dar gestellte, kämmende Extruderschnecken gekennzeichnet. Die Schneckenabtriebswellen sind in den Rückdrucklagern 2 gelagert.

Mittels des Flanschdeckels 3 wird der Verbindungsflansch 7 eines nicht gezeigten Extrudergehäuses verschlossen.

In dem Gehäuse 6 ist in der Wandung 10 ein Lagerflansch 4 angeordnet für die Aufnahme der Zuganker 5. Die Zuganker sind mit ihren gegenüberliegenden Enden mittels Muttern 11 mit dem Flanschdeckel 3 verschraubt.

Auf den Zugankern 5 sind die Halbleiter-Dehnungsmeßstreifen 8 angeordnet, die auf den Durchmesser und die Materialeigenshaft der Zuganker geeicht und mit der Meßeinrichtung 9 verbunden sind.

Mittels der Meßeinrichtung 9, an die ein Anzeiginstrument, beispielsweise ein Voltmeter 13, angeschlossen ist, werden die gemessenen Werte ermittelt und sichtbar gemacht.

Aufgrund der Pfeile 14 wird der Kraftverlauf, ausgehend von den Abtriebswellen 1, über die Rückdrucklager 2, dem Lagerflansch 4 auf die Zuganker 5 und zu dem Flanschdeckel 3 dargestellt.

Die als Verformungselement ausgebildeten Zuganker 5 erfahren dabei eine gewisse Dehnung, je nach Größe der Rückdruckkraft, die exakt von den Halbleiter-Dehnungsmeßstreifen erfaßt und in der Meß-und Anzeigeeinrichtung 9 sichtbar gemacht wird.

Aufgrund dieses Wertes können dann entsprechende Gegenmaßnahmen eingeleitet werden, z.B. eine stärkere Beheizung des nicht gezeigten Extruderzylinders, um eine Viskositätsabsen kung des thermoplastischen Materials und somit eine Reduzierung des Druckes bzw. Rückdruckes im Extruderzylinder zu erreichen.

Aus Sicherheitsgründen kann die Meß-und Anzeigeeinrichtung auch mit einer Abschalteinrichtung für das Getriebe verbunden sein.

## Ansprüche

Einrichtung zum Messen des Massedruckes in einem Zweischneckenextruder über die Erfassung des Axialrückdruckes der Schnecken, wobei der Axialrückdruck gegen ein an der Rückwandung des Getriebegehäuses angeordnetes Verformungselement wirkt, auf welches Dehnungsmeßstreifen aufgeklebt sind und wobei an die Dehnungsmeßstreifen eine geeignete Anzeigevorrichtung angeschlossen ist zwecks Sichtbarmachens des axialen Rückdruckes der Schnecken und somit des Druckes im Extrusionsraum
**dadurch gekennzeichnet,**
daß die Zuganker (5) für die Rückleitung des Axialrückdruckes der Schnecken zum Extrudergehäuse bzw. zum Gehäuseflansch (7) als die Dehnungsmeßstreifen (8) tragende Verformungselemente ausgebildet sind.

11  1  Fa  Fa  1  11  7  3  5

5

8

10

2

4

14  2  14

6

8

12

9

13

+  −

0 248 153